# EUROPEAN PATENT SPECIFICATION

(11) **EP 1 432 198 B1**
(45) Date of publication and mention of the grant of the patent: **20.06.2007**
(21) Application number: 02293180.2
(22) Date of filing: 20.12.2002
(51) Int. Cl.: H04L 29/06, H04L 12/28, H04L 29/12, H04Q 7/38

(54) **Method and device for data flow handling in mobile IP**
Verfahren und Vorrichtung zur Datenstrombehandlung in mobilem IP
Procédé et dispositif pour la manipulation de flux de données dans IP mobile

(43) Date of publication of application: 23.06.2004
(73) Proprietor: MOTOROLA INC., Schaumburg, IL 60196 (US)
(72) Inventor: Gallego Catalina, Miguel, 92120 Montrouge (FR); Janneteau, Christophe, 78390 Bois D'Arcy (FR)
(74) Representative: Cross, Rupert Edward Blount

(56) References cited:
- US-A1- 2002 194 259
- N. A. FIKOURAS, A. J. KOENSGEN, C. GOERG, COMNETS, IKOM, W. ZIRWAS, M. LOTT: "Filters for Mobile IP Bindings (NOMAD)" INTERNET-DRAFT , [Online] July 2002 (2002-07), pages 1-18, XP002236721 Bremen Retrieved from the Internet: <URL:http://ietfreport.isoc.org/ids/draft- nomad-mobileip-filters-02.txt> [retrieved on 2003-04-01]

## Description

### Field of the invention

This invention relates to data flow handover in communication using mobile Internet protocol.

### Background of the invention

Communication between a node and the Internet requires the use of standardised protocols. This is equally true of Mobile Nodes, for which the protocol must take account of changes of the Internet access point of the Mobile Node as it moves between different Internet Protocol ('IP') subnets. Various protocol standards for Mobile Nodes already exist or are proposed, such as the Mobile IP v4 and draft v6 standards of the Internet Engineering Task Force ('IETF').

In the Mobile IP protocol each Mobile Node gets assigned a Home Address (H@) that will be used to reach it and identify it as it moves in different IP subnets. The Mobile IP protocol ensures that any data packet addressed to the Mobile Node's Home Address will be correctly routed to the Mobile Node's current location. To do that, a special router, named the Home Agent (HA), is placed on the IP subnet of the Home Address. This IP subnet is called the Home Network (HN). Any packet addressed to the Mobile Node's Home Address arrives at the Home Network. The Home Agent intercepts the packet on behalf of the Mobile Node, and forwards it to the current location of the Mobile Node.

The Home Agent needs a way of tracing the current location of the Mobile Node, so it can forward packets to it. Each time the Mobile Node arrives at a new network it obtains a new IP address, which is called the Care-of Address. It immediately sends a special message, called a Binding Update (BU), to the Home Agent to notify it of its new Care-of Address. Now the Home Agent can intercept packets addressed to the Home Address and forward them to the Mobile Node's current Care-of Address: the Home Agent has established a binding between the Home Address and the Care-of Address. Each time the Mobile Node changes IP subnet, a new Care-of Address is obtained, and a new binding is established with the Home Agent.

In the Mobile IP terminology any node communicating with a Mobile Node is called a Correspondent Node (CN). When a Correspondent Node wants to communicate with a Mobile Node it sends its packets to the Mobile Node's Home Address. The Home Agent intercepts the packets, and forwards them to the Mobile Node's Care-of Address. When the Mobile Node receives the forwarded packets, it sends its reply packets directly to the Correspondent Node. This is called triangular routing, because outward-bound packets are not directly exchanged between the Correspondent Node and the Mobile Node, but rather they are routed through the Home Agent. To avoid this, a route optimisation technique is used: when the Mobile Node moves, Binding Update messages are sent to all of its Correspondent Nodes. The Correspondent Nodes keep a binding list, similar to the list kept by the Home Agent, between Home Addresses and Care-of Addresses. In this way they know which Care-of Address to use for each Mobile Node, avoiding thus the need to route packets through the Home Agent.

A typical Mobile Node has a single network interface, for example a wireless Local Area Network ('LAN') interface. This network interface gets attached to the different Internet access points as the Mobile Node moves. When the Mobile Node gets access to a different IP subnet, a handover between the old and the new IP subnets is performed using the Mobile IP protocols.

IP mobility protocols also consider the case of vertical handover. In this case the Mobile Node is equipped with several different network interfaces that allow it to use different network access technologies (for example, a 802.11b wireless LAN interface and an Ethernet interface). The Mobile Node may decide at any time which access network interface to use, and can use the Mobile IP handover protocols to switch between different access network technologies. In this case all ongoing communications on the Mobile Node are switched at the same time from one interface to another. For vertical handover, the Mobile Node may be equipped with several different network interfaces, each providing access to a different IP subnet. Each network interface is assigned a different IP address, that is, the Mobile Node has several IP addresses, one per interface. The Mobile Node may choose any of the available IP addresses as a Care-of Address to use in its Binding Updates to the Home Agent and the Correspondent Node. This will force all data communications to go through the corresponding interface. By sending Binding Updates with the IP address of one interface first, and then with the IP address of a different interface, a vertical handover between the two interfaces can be performed.

Home Agents and Correspondent Nodes allow a Home Address to be bound to a single Care-of Address. There is currently no standard solution for supporting multiple Care-of Addresses bound to a single Home Address, although the possibility is currently being discussed. Since only one Care-of Address may be used at a time, all the Mobile Node's IP traffic is exchanged via one Care-of Address, that is, via one interface. This means that in the case in which a Mobile Node may have multiple different network interfaces, only one interface may be used at a time for I P traffic.

A third type of handover, referred to below as 'per-flow handover', is also desirable. In per-flow handover a Mobile Node equipped with multiple access interfaces uses different interfaces selected from the available network interfaces for different data flows. The selection among the available interfaces may take into account the different characteristics of the multiple data flows to map or allocate each data flow to the most appropriate network. The choice of network and the decision for handover may be taken by the Mobile Node, the application, the network operator or the application server for example. The network operator can use this type of handover to optimise the use of resources in its network, such as implementation of load balancing policies, for example, and service delivery; the Mobile Node can use this type of handover to optimise the communication of the desired content through the most appropriate network, in a cost and Quality of Service ('QoS') effective manner, for example.

One proposed technique for per-flow handover management uses a different Binding Update, with a respective Care-of Address, for each different Correspondent Node: this solution is based on the idea that each network interface of the Mobile Node has a different IP address. The Mobile Node can use only one of those IP addresses as a Care-of Address to establish the binding with the Home Agent. However the Mobile Node can use a different Care-of Address to send the Binding Update messages to its Correspondent Nodes. This way a single Home Address can be associated with multiple different Care-of Addresses without a specific support on the Home Agent. The Mobile Node uses a different Care-of Address depending on the network it wishes to use for the data flow between the Mobile Node and each Correspondent Node.

With this solution the Mobile Node may use different access networks for communications with different Correspondent Nodes. If the different data flows of the Mobile Node correspond with respective Correspondent Nodes, this solution provides a simple means of achieving per-flow handover. However, with this solution, it is not possible to have two data flows with the same Correspondent Node go through different network interfaces. If a handover is performed, all data flows between the Mobile Node and a Correspondent Node are switched at the same time.

When it is the Correspondent Node that initiates the communication, data is initially sent to the Home Network, and the Home Agent forwards it to the Care-of Address used for the Binding Updates sent to the Home Agent. When the Mobile Node receives such a packet, it immediately sends a Binding Update to the Correspondent Node with the appropriate Care-of Address, thus making sure that the communication continues on the preferred network interface but all the data flows between the Mobile Node and that Correspondent Node still go through a single network interface.

IETF Internet Draft draft-nomad-mobileip-filters-01.txt (work in progress) proposes to extend the Mobile IP (v4 or v6) protocol by providing the means for Mobile Nodes to notify binding agents (Home Agent or Correspondent Nodes) of an association between flow filters and specific bindings. A Mobile Node is required to include in its binding update a list of filters that indicate which flows are associated with the registered Care-of Address. This proposal extends the simultaneous binding capability of Mobile IP (sending a duplicate copy of every active flow to all registered Care-of Address) by assigning a filter to each registered Care-of address so that only flows that match this filter will be forwarded to this address. The notion of default binding is also supported for the case of flows that do not match any of the filters pre-established. As such, this proposal enables a Mobile Node to select for each flow the most appropriate point of attachment and perform per-flow handover between different access networks. However, this proposal has the drawback that it requires modification to Mobile IP on all binding agents (Home Agent, Correspondent Nodes...) in addition to the Mobile Node.

Considerations of compatibility with the existing population of nodes with which the Mobile Node is to communicate makes it desirable for the handover protocols to be in conformity with the existing mobility standards, and not to require any changes on the Correspondent Node side nor in the Home Agent.

IETF Internet draft draft-soliman-mobileip-flow-move-01.txt (work in progress) proposes to introduce a new extension to Mobile-IPv6 to allow hosts to direct inbound flows individually to certain preferred interfaces. The draft introduces so-called flow movement sub-options enabling a Mobile Node to support per-flow movement, that is, to move each flow individually between several interfaces (or points of attachment). The flow movement sub-options are to be inserted in Binding Updates (and Binding Acknowledges for status report) and include a description of the flow the binding (Mobile Node's Home Address / Care-of Address) should be considered for. As such, this proposal enables a Mobile Node to select for each flow the most appropriate point of attachment and perform per-flow handover between different access networks. However, once again, this proposal has the drawback of requiring modification to Mobile IP on all binding agents (Home Agent, Correspondent Nodes...) in addition to the Mobile Node.

### Summary of the invention

The present invention provides a method of communication using mobile Internet protocol between a Mobile Node and Correspondent Nodes, and a Mobile Node for such a method of communication, as described in the accompanying claims 1 and 10 respectively. Preferred embodiments are set forth in the dependent claims.

### Brief description of the drawings

Figure 1 is a schematic diagram of a previously proposed system for communication over a network,
Figure 2 is a schematic diagram of a system for communication over a network in accordance with one embodiment of the invention, given by way of example,
Figure 3 is a schematic diagram of the architecture of the Mobile Node in the system of Figure 2,
Figure 4 is a flow chart of processing of out-going signals of the Mobile Node in the system of Figure 2,
Figure 5 is a flow chart of processing of incoming signals of the Mobile Node in the system of Figure 2, and
Figure 6 is a flow chart of an algorithm for assigning Home Addresses in the Mobile Node in the system of Figure 2

### Detailed description of the preferred embodiments

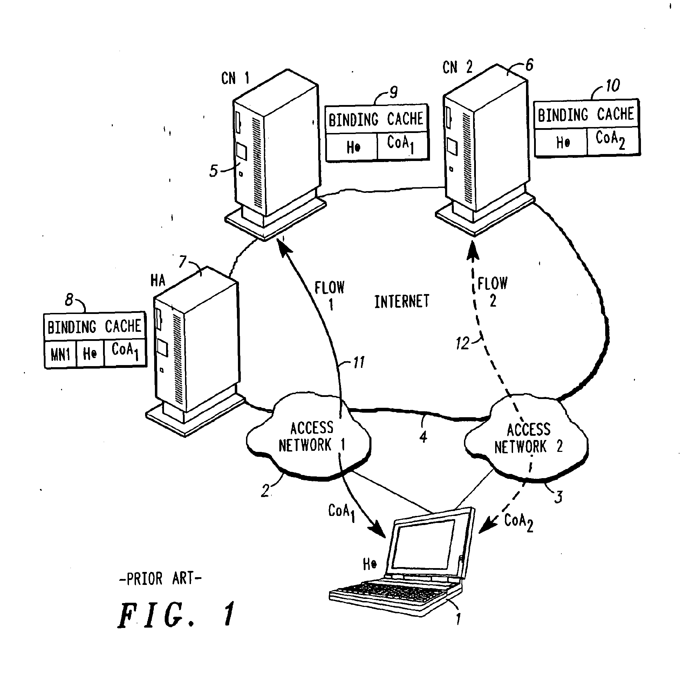

The communication system shown in Figure 1 functions using the current IPv4 or draft IPv6 standards. A Mobile Node 1 communicates through first and second Access Networks 2 and 3 and the Internet 4 with first and second Correspondent Nodes 5 and 6. The Home Address *H*@ of the Mobile Node 1 is registered at its Home Agent 7.

The system shown In Figure 1 is of the known kind referred to above, in which the Mobile Node 1 uses a different Binding Update, with a respective Care-of Address, for each different Correspondent Node such as 5, 6. The Mobile Node 1 uses only one of those IP addresses as a Care-of Address to establish the binding with the Home Agent 7, which registers the Care-of Address for that Mobile Node's Home Address in a Home Agent's Binding Cache 8. The Mobile Node 1 can use the same or a different Care-of Address to send the Binding Update messages to its Correspondent Nodes 5, 6, which register the Care-of Address received in a respective Correspondent Node's Binding Cache 9, 10. Each network interface of the Mobile Node 1 is allocated a different IP address and the Mobile Node selects the Care-of Address depending on the interface and Access Network 2 or 3 it wishes to use for the data flow between the Mobile Node 1 and the different Correspondent Nodes 5 or 6.

With this solution the Mobile Node 1 may use a different Access Network 2, 3 for communications with the different Correspondent Nodes 5, 6 but it is not possible to have two data flows with the same Correspondent Node 5 or 6 go through different network interfaces. Accordingly, a first data flow 11 may be sent through the Access Network 2 and corresponding network interface to the Correspondent Node 5 using Care-of Address CoA₁, which was already registered in the Home Agent's Binding Cache 8 and is now registered in the Binding Cache 9 of the Correspondent Node 5, while a second data flow 12 may be sent through the Access Network 3 and corresponding network interface to the Correspondent Node 6 using a new Care-of Address CoA₂, which is now registered in the Binding Cache 10 of the Correspondent Node 6. If a handover of a communication between the Mobile Node 1 and the Correspondent Node 5 or 6 is performed, all data flows between the Mobile Node 1 and that Correspondent Node are switched at the same time.

When it is the Correspondent Node 5 or 6 that initiates the communication, data is initially sent to the Home Network, using the Home Address *H*@ of the Mobile Node 1, and the Home Agent 7 forwards it to the Care-of Address CoA₁ in its Binding Cache 8 that is used for the Binding Updates sent to the Home Agent. When the Mobile Node 1 receives such a packet, it immediately sends a Binding Update to the Correspondent Node 5 or 6 with the selected Care-of Address CoA₁ or CoA₂, thus making sure that the communication will occur thereafter on the preferred network interface but all the data flows between the Mobile Node 1 and that Correspondent Node 5 or 6 still go through a single network interface.

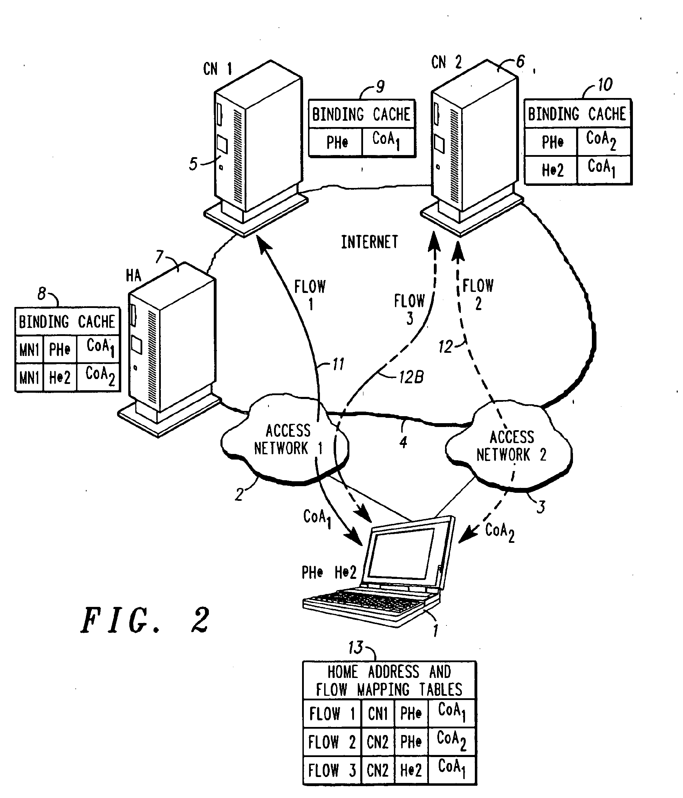

The embodiment of the present invention shown in Figure 2, in which elements of the communication system similar to those of the system of Figure 1 have similar references, enables different data flows between the Mobile Node 1 and a Correspondent Node such as 5 or 6 to go through more than one network interface. In other words, the Mobile Node 1 is able to redirect separate data flows with the same Correspondent Node such as 5 or 6 through different network types, and to handover a single flow from one access network such as 2 or 3 to another. In this way more than one data flow such as 12 and 12B, may be maintained simultaneously over different access networks such as 2 or 3 with the same Correspondent Node such as 5 or 6. The Mobile Node 1 can decide, based on diverse criteria (terminal decision, operator rules, network request, application configuration, user preferences...), to switch a specific data flow from one interface to another. This is achieved by allocating a plurality of different Home Addresses dynamically to a single Mobile Node such as 1, and using respective Home Addresses for different data flows. Each Home Address can then be independently bound to a respective Care-of Address, which may be the interface IP address, so that each data flow can be associated with a different network type. No change to existing protocols nor to the existing population of Correspondent Nodes such as 5 and 6 or Home Agents such as 7 is needed. The Mobile Node 1 maintains Home Address and Flow Mapping Tables 13, allocating the different data flows to different Home Addresses such as *PH*@ and *H*@*₂* and registering the Care-of Address such as *CoA₁* and *CoA₂* bound to each Home Address. Since the number of data flows that may occur at the same time on the same Mobile Node is not fixed, a mechanism for the dynamic allocation of Home Addresses is provided.

The currently proposed draft standard Mobile-IPv6 enables a Mobile Node 1 away from home to discover the prefix(es) on its home network by exchanging ICMPv6 "Mobile Prefix Solicitation" and "Mobile Prefix Advertisement" messages with its Home Agent 7. This may be used by the Mobile Node 1 to auto-configure and refresh one or more new Home Addresses derived from these prefixes (Stateless Address Auto-configuration). The Home Agent 7 can also send unsolicited "Mobile Prefix Advertisements" to the Mobile Node 1 in case of home network renumbering. According to this mechanism, Duplicate Address Detection (DAD) can be performed by the Home Agent 7 on behalf of the Mobile Node 1 in case uniqueness of the newly auto-configured address must be verified in the home network. To request DAD for its Home Address, the Mobile Node 1 will send a "Binding Update" (BU) message with the 'D' bit set. This mechanism enables a Mobile Node 1 away from home to obtain new Home Addresses dynamically and verify their uniqueness through Stateless Address Auto-configuration; it does not however support other means to assign addresses to a node and especially Stateful Auto-configuration (e.g. DHCPv6). The consequence is the Home Network, and in particular the Home Agent 7, cannot explicitly decide which address to be assigned to a Mobile Node.

The currently proposed draft Mobile IPv6 standard already supports a stateless auto-configuration mechanism that can be used for dynamic Home Address allocation. This is used in a preferred embodiment of the invention, and enables communication to be performed in conformity with the protocol of the currently proposed draft Mobile IPv6 standard without any changes on the Home Agent 7.

In another embodiment of the present invention, Dynamic Host Configuration Protocol ('DHCP') is used for new address allocation. The Home Agent 7 is set up to ask for a new address on behalf of the Mobile Node 1.

In yet another embodiment of the present invention, a proprietary protocol between the Home Agent 7 and the Mobile Node 1 is used. In this case a new protocol between the Mobile Node 1 and the Home Agent 7 is defined, with corresponding adaptation of the Home Agent 7.

In the preferred embodiments of the present invention, two elementary operations are supported: allocating a new address and freeing an already allocated address. The Mobile Node 1 always keeps at least one Home Address, which will allow it to be reached at any moment. This address is referred to hereafter as the Primary Home Address (*PH*@), and it is not possible to free the Primary Home Address. A Security Association exists between the Primary Home Address *PH*@ and the Home Agent 7. New addresses are requested using the Primary Home Address *PH*@, and the Security Association between the Primary Home Address and the Home Agent 7. When a new address is allocated a Security Association is created between the newly allocated address such as *H*@*₂* and the Home Agent 7.

The dynamic allocation of addresses enables data flows to be redirected into different access networks using multiple Home Addresses. When the Mobile Node 1 has data to send on an existing flow, it identifies to which flow the data belongs and uses the Home Address such as *PH*@ or *H*@*₂* associated to that flow to send the data. In this way the Correspondent Node such as 5 or 6 will always reply to the appropriate Home Address *PH*@ or *H*@*₂* and thus it will use the selected access network.

When the Mobile Node 1 identifies a new data flow, and only if none of the existing Home Addresses is usable for this new flow, it dynamically allocates a new Home Address such as *PH*@ or *H*@*₂* using one of the methods proposed above. The Mobile Node 1 can then use that address for communication with Correspondent Nodes such as 5 or 6. The Mobile Node 1 must send Binding Updates to the Home Agent 7 for each of its Home Addresses.

When the Mobile Node 1 wants to perform a vertical handover of a particular data flow, it is sufficient to send a Binding Update with the associated Home Address and the IP address of the selected interface as Care-of Address. In this way only the selected flow will handover to the new network interface.

When a previously allocated Home Address such as *H*@*₂* is no longer needed the Mobile Node 1 frees it using one of the methods proposed above.

If a Correspondent Node such as 5 or 6 initiates the communication it will use the Primary Home Address to reach the Mobile Node. With some applications it is possible to switch to a different Home Address, for example using a redirect procedure. Another option is to allocate that Home Address permanently to be used with this Correspondent Node such as 5 or 6, for instance by allocating a particular Home Address to be used for voice applications.

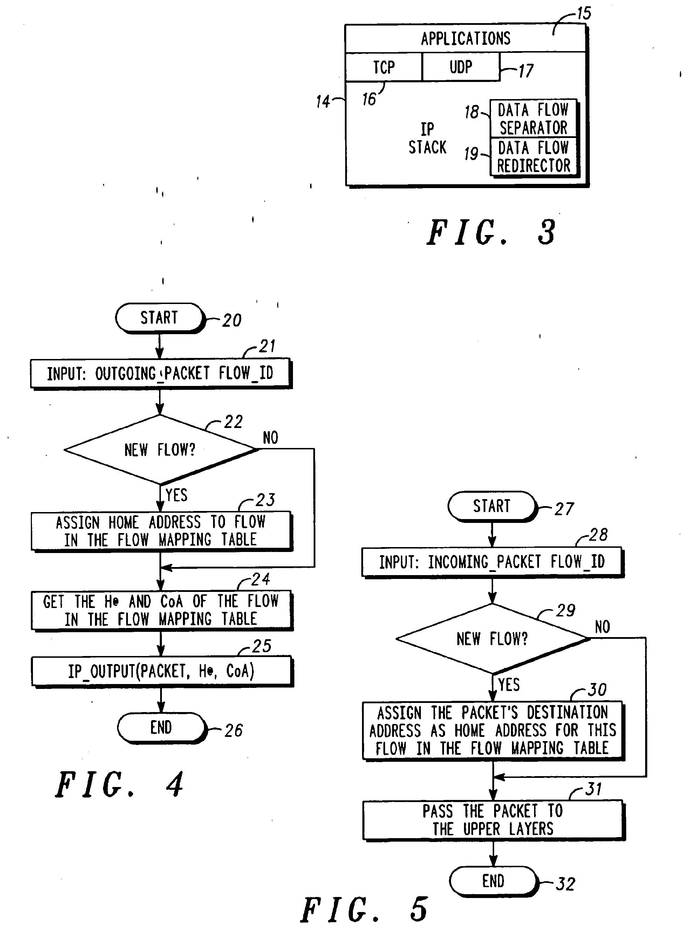

Figure 3 illustrates the IP stack 14 in a preferred embodiment of the Mobile Node 1. The upper levels of the IP stack 14 include an application layer 15, a transmission control protocol ('TCP') layer 16 and a user datagram protocol ('UDP') layer 17. In addition, the lower levels of the IP stack 14 include a data flow separator 18 and a data flow redirector 19. The data flow separator 18 classifies incoming and outgoing data packets and decides to which data flow they belong. The data flow redirector 19 chooses the appropriate Home Address and Care-of Address for each outgoing packet based on the flow to which the packet belongs and the selected network for that flow.

The Mobile Node 1 also includes the Home Address and Flow Mapping Tables 13. In this embodiment of the present invention, a Home Address table contains a list of all Home Addresses currently in use by the Mobile Node. The Primary Home Address *PH*@ is the first element of the Home Address table. The following information is stored in the Home Address table:
- Home Address;
- Care-of Address: it is the Care-of Address used for Binding Updates sent to the Home Agent 7;

A Flow Mapping Table 13 contains an entry for each current data flow. The following information is stored in this table:
- Flow ID: it is an integer that identifies the flow uniquely;
- Correspondent Node: it is the Correspondent Node associated to this flow;
- Flow Information: miscellaneous information associated to this flow.

This information can be used by the Data Flow Separator to decide the flow to which a packet belongs.
- Home Address: Home Address used for packets belonging to this flow;
- Care-of Address: Care-of Address of the selected network for this flow;

Separating the application data into different flows is done by the Data Flow Separator 18, which classifies outgoing application data into different data flows. Many criteria may be used to separate outgoing data into different flows:
- Applications could use a specific programming interface to tell the Data Flow Filter which data belongs to each flow.
- A Data Flow Filter may analyse protocol headers to separate data flows. The classification may be made based on the IP flow label field, the source and destination ports, the protocol options that are present, etc.
- A Data Flow Filter may offer an interface to the network operator to fix a set of rules to be followed to separate data into flows.
- The network may dynamically indicate what set of rules should be used to separate data into flows.

Once the Data Flow Separator 18 has identified which flow each data packet is to belong to, it verifies the Flow Mapping Table for each data packet and retrieves the Flow ID corresponding to that flow. Preferably, the Data Flow Separator uses the Flow Information field of the Flow Mapping Table to help it classify the flow. For a new flow a new entry is created in the Flow Mapping Table and a new Flow ID is assigned. Any information required to classify packets belonging to this flow is stored in the Flow Information field of the Flow Mapping Table.

Once the data has been classified into different flows, the Data Flow Redirector 19 redirects each flow through its respective network interface such as 2 or 3. For each flow the Redirector 19 chooses which network is more appropriate to send the packet. Again many criteria may be used to choose the network: selection by the application, network operator criteria, user preferences, selection by the network, for example.

Now the packet is redirected through the selected network. In principle the Redirector 19 can use various mechanisms to send the data flows through the respective interfaces. In one embodiment of the invention, it separates the flows, associating a different Care-of Address to each data flow; in another embodiment of the invention, it allocates a different Home Address for each flow. In the preferred embodiment of the invention, the Redirector 19 combines these two methods. To do that the Redirector 19 interacts with the Mobile IP stack 14, providing the Home Address and Care-of Address to use it to send the packets and what information must be carried on the Binding Updates.

When a new flow is created the Redirector 19 must associate a Home Address to the flow. All packets belonging to the new flow will be sent using the associated Home Address. The following algorithm is followed:
- The Redirector 19 searches the list of currently allocated Home Addresses, which includes the Primary Home Address *PH*@ and any dynamically allocated Home Addresses such as *H*@*₂*.
- For each Home Address such as *PH*@ or *H*@*₂* the Redirector 19 checks if there is an existing flow with that Home Address to the same Correspondent Node such as 5 or 6 as the new flow. If it is not the case, that Home Address is selected, and it will be used with the new flow.
- If after searching the whole Home Address list a Home Address has not been identified, a new Home Address is allocated using a dynamic Home Address allocation mechanism.

When it is a Correspondent Node such as 5 or 6 that initiates the communication, if the application allows it, the communication is redirected to a different Home Address, but this can only be decided on a per-application basis. In many applications the flow must use the Home Address already used by the Correspondent Node such as 5 or 6 to address the Mobile Node. Since this will most probably be the Primary Home Address *PH*@, the following rule is preferably added to the Home Address selection algorithm to avoid overloading the Primary Home Address PH@:
- When a different Home Address is available, avoid using the Primary Home Address PH@.

Alternatively, the following stricter rule is added to the Home Address selection algorithm:
- Do not use the Primary Home Address *PH*@ for Mobile Node initiated flows.

For each flow the Mobile Node 1 sends Binding Updates to the Correspondent Node such as 5 or 6. The Redirector 19 provides the IP stack with the Home Address and Care-of Address to use in the Binding Updates. For each data flow the Redirector 19 provides the IP stack with the Home Address and the Care-of Address corresponding to the network to use for sending or receiving that flow.

Binding Updates are also sent to the Home Agent 7. The Care-of Addresses used in these Binding Updates depend on the exact policy followed by the Redirector 19. Any of the available Care-of Addresses can be chosen.

To handover a single flow from one interface to another it is just necessary to change the Care-of Address that is sent on the Binding Updates to the Correspondent Node such as 5 or 6 of that flow. That is done by changing the Care-of Address field in the Flow Mapping Table 13 entry corresponding to that flow.

When a flow finishes (either by an explicit flow end notification, or by a timeout) a check is performed to verify if the associated Home Address such as *PH*@ or *H*@*₂* is being used by another flow. If it is not, and the Home Address is not the Primary Home Address *PH*@, the Home Address such as *H*@*₂* is freed.

Figures 4 to 6 show examples of algorithms that may be used for the processing of outgoing and incoming packets and for the assignment of Home Addresses. It would be possible to use the same Home Address for different data flows being sent to the same Correspondent Node. However, this is only possible if these data flows all pass through the same interface (Access Network) and they could then only be handed over to a new interface simultaneously and together. The algorithms below assume that each different data flow for the same Correspondent Node has a different Home Address, enabling each of them to be handed over independently. It is also possible to make a compromise between these two functions and select first which data flows for the same Correspondent Node should have a different Home Address.

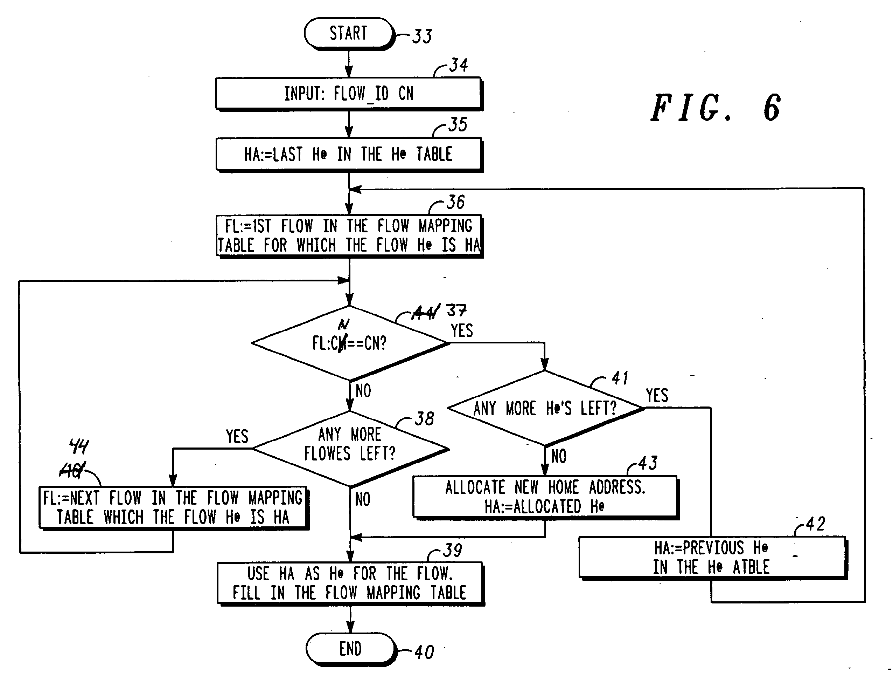

The algorithm for the processing of outgoing packets shown in Figure 4 starts at 20 in response to the occurrence of an outgoing packet to be processed. First, the Data Flow Redirector 19 obtains the outgoing packet's flow ID from the Data Flow Separator 18 at step 21. The Data Flow Redirector 19 takes a decision 22 whether the outgoing packet is classified as a new flow or not. If it is, at step 23 the Data Flow Redirector 19 assigns a new Home Address to the new flow ID in the Flow Mapping Table 13, using the algorithm described below with reference to Figure 6, for example. A Care-of Address may then be chosen and assigned to each Home Address by the Mobile Node as a function of the application, the network operator or the application server for the corresponding data flow, for example, and modified if it is desired to handover the data flow. The processing algorithm then passes to the following step 24, in which the Data Flow Redirector 19 retrieves the assigned Home Address and Care-of Address from the Flow Mapping Table 13. The retrieved IP Addresses are then used to send the packet at step 25. The processing algorithm then ends at 26. If the result of the decision at step 22 was that the packet is not to be classified as a new flow, the algorithm passes directly to step 24 in which the Data Flow Redirector 19 retrieves the Home Address assigned to the existing flow.

The algorithm for the processing of incoming packets shown in Figure 5 starts at 27 in response to the occurrence of an incoming packet to be processed. First, the Data Flow Redirector 19 obtains the incoming packet's flow ID from the Data Flow Separator 18 at step 28. The Data Flow Redirector 19 takes a decision 29 whether the incoming packet is classified as a new flow or not. If it is, at step 30 the Data Flow Redirector 19 assigns to the flow ID in the Flow Mapping Table 13 the incoming packet's destination address as the Home Address. In the following step 31, the Data Flow Redirector passes the incoming packet to the upper layers of the IP stack. The processing algorithm then ends at 32. If the result of the decision at step 29 was that the packet is not to be classified as a new flow, the algorithm passes directly to step 31 in which the Data Flow Redirector 19 passes the incoming packet to the upper layers of the IP stack.

The algorithm for the assignment of Home Addresses corresponding to step 23 of the outgoing packet processing algorithm is shown in more detail in Figure 6. It picks a Home Address and checks all the flows that use that Home Address to make sure that it does not correspond to the same Correspondent Node. If it does not, we can use this home address for the new flow. Otherwise, we need to pick the next home address in the table and try again. If we run out of addresses (we have already tried unsuccessfully all the Home Addresses in the Home Address Table) we allocate a new address using one of the dynamic home address allocation mechanisms mentioned above.

The algorithm for the assignment of Home Addresses starts at 33. First, the Data Flow Redirector 19 obtains the packet's flow ID and the Correspondent Node identification from the Data Flow Separator 18 at step 34. The Data Flow Redirector 19 sets a home address value *ha* to the last Home Address listed in the Home Address Table in a step 35. Then, in a step 36, the Data Flow Redirector 19 sets a flow value *fl* to the first flow identification in the Flow Mapping Table for which the Home Address is equal to the value *ha*. Next, the Data Flow Redirector 19 takes a decision 37 whether the Correspondent Node identification of the flow *fl* is the same as the Correspondent Node identification of the packet flow obtained at step 34. If it is not, at decision 38 the Data Flow Redirector 19 checks whether there are any more flows for which the Home Address value is *ha*. If not, the Data Flow Redirector 19 assigns the Home Address value *ha* as Home Address to the flow ID in the Flow Mapping Table 13 at step 39 and the Home Address assignment algorithm then ends at 40.

If the decision at 37 is that the Correspondent Node identification of the flow *fl* is the same as the Correspondent Node identification of the packet flow obtained at step 34, the Data Flow Redirector 19 checks at decision 41 whether there is another Home Address in the Home Address Table. If there is, in a step 42, the Data Flow Redirector 19 sets the Home Address value *ha* to the immediately preceding Home Address in the Home Address Table and reverts to step 36. If at decision 41 it finds that it has already looped over all the Home Addresses in the Home Address Table, in a step 43, it allocates a new Home Address and sets the Home Address Value *ha* to it and passes to the step 39.

If the decision at 38 is that there are more flows for which the Home Address value is *ha*, in a step 44, the Data Flow Redirector 19 sets the flow value *fl* to the next flow identification in the Flow Mapping Table for which the Home Address is equal to the value *ha* and reverts to the decision 37.

It will be appreciated that the above algorithms are given by way of example only of methods of setting the Home Addresses and Care-of Addresses to be used and other methods may alternatively be used.

It will be noted that the data flow handover methods and protocols of the embodiments of the present invention described above do not introduce any additional security issues in the Mobile IP implementation. Security mechanisms currently used in the Mobile IP standards, such as Return Routability and Cryptographically Generated Addresses, function correctly with the embodiments described.

In particular, it will be noted that in the dynamic allocation of Home Addresses:
- The Mobile Node has a Security Association between the Primary Home Address and the Home Agent.
- This Security Association is used to request a new Home Address.
- The Home Agent automatically creates new Security Associations upon dynamic allocation of Home Addresses.

## Claims

1. A method of communication using mobile Internet protocol between a Mobile Node (1) and Correspondent Nodes (5, 6) in a network that also comprises a Home Agent (7) for the Mobile Node, said Mobile Node (1) having a plurality of network interfaces (2, 3) with said network, said method including per-flow handover management of data flows, which comprises selectively transmitting different data flows between said Mobile Node (1) and Correspondent Nodes (5, 6) over respective ones of said network interfaces (2, 3) identified by respective Internet addresses,
**characterised in that** a plurality of Home Addresses (PH@, H@₂) for said Mobile Node (1) are registered with said Home Agent (7), respective ones of which are allocated dynamically to said different data flows between said Mobile Node (1) and Correspondent Nodes (5, 6), and respective network interfaces (2, 3) for said Mobile Node are allocated dynamically to said Home Addresses (PH@, H@₂), so that said different data flows between said Mobile Node (1) and the same Correspondent Node (5 or 6) are allocated to respective network interfaces (2, 3) and the allocation of network interfaces (2, 3) may be modified dynamically.

2. A method of communication as claimed in claim 1, wherein said different data flows are communicated simultaneously between said Mobile Node (1) and the same Correspondent Node (5 or 6) through said respective network interfaces with respective Home Addresses (PH@, H@₂).

3. A method of communication as claimed in claim 1 or 2, wherein Mobile Prefix Solicitation and Mobile Prefix Advertisement messages are exchanged between said Mobile Node (1) and said Home Agent (7) and said Mobile Node (1) uses prefixes from those messages to establish, configure, refresh and/or modify said respective Home Addresses (PH@, H@₂).

4. A method of communication as claimed in claim 3, wherein said Home Agent (7) performs Duplicate Address Detection on Home Addresses that said Mobile Node (1) establishes, configures, refreshes and/or modifies.

5. A method of communication as claimed in any preceding claim, wherein a security association exists between said Home addresses and said Home Agent (7).

6. A method of communication as claimed in any preceding claim, wherein said Mobile Node (1) performing a handover of a data flow comprises sending a Binding Update with the associated Home Address (PH@ or H@₂) and the IP address of the selected interface as Care-of Address (CoA₁, CoA₂) to said Home Agent (7).

7. A method of communication as claimed in any preceding claim, wherein said Mobile Node (1) performing a handover of a data flow, comprises sending a Binding Update with the associated Home Address (PH@ or H@₂) and the IP address of the selected interface as Care-of Address to said Correspondent Node (5 or 6).

8. A method of communication as claimed in any preceding claim, wherein said Mobile Node (1) performing a handover of a data flow includes freeing a Home Address (H@₂) that is no longer used for communication between said Mobile Node (1) and said Correspondent Nodes (5, 6).

9. A method of communication as claimed in claim 8, wherein said Mobile Node (1) identifies at least one of said Home Addresses (PH@) as a primary Home Address that is never freed, other Home Addresses (H@₂) being preferentially used for communication between said Mobile Node (1) and said Correspondent Nodes (5, 6).

10. A Mobile Node for a method of communication as claimed in any preceding claim, comprising data flow separator (18) and director (19) means for classifying at least outgoing data packets, selecting and allocating a plurality of respective network interfaces and a plurality of corresponding Home Addresses (PH@ or H@₂) for different data flows between said Mobile Node (1) and the same Correspondent Node (5 or 6), and modifying the allocation of network interfaces and Home Addresses (PH@, H@₂) dynamically.

11. A Mobile Node as claimed in claim 10, wherein said data flow separator and director means (18, 19) comprises a Home Address table (13) identifying the current Home Addresses (PH@, H@₂) of the Mobile Node (1) and corresponding Care-of Addresses (CoA₁, CoA₂), and a flow mapping table (13) identifying the Correspondent Node (5, 6) associated with each current data flow and the corresponding selected Home Addresses and Care-of Addresses (CoA₁, CoA₂).

12. A Mobile Node as claimed in claim 10 or 11, wherein said data flow separator and director means (18, 19) is responsive to applications running on said Mobile Node (1) in classifying incoming and outgoing data packets.

13. A Mobile Node as claimed in any of claims 10 to 12, wherein said data flow and director separator means (18, 19) is responsive to protocol headers of incoming and outgoing data packets in classifying said data packets.

14. A Mobile Node as claimed in any of claims 10 to 13, wherein said data flow separator and director means (18, 19) comprises an interface responsive to the network operator in classifying said data packets.

15. A Mobile Node as claimed in any of claims 10 to 14, wherein said data flow separator and director means (18, 19) is responsive to applications running on said Mobile Node (1) in selecting and allocating network interfaces (2, 3) and corresponding Home Addresses (PH@, H@₂) for incoming and outgoing data packets.

16. A Mobile Node as claimed in any of claims 10 to 15, wherein said data flow separator and director means (18, 19) comprises an interface responsive to the network operator in selecting and allocating network interfaces (2, 3) and corresponding Home Addresses (PH@, H@₂) for incoming and outgoing data packets.

17. A Mobile Node as claimed in any of claims 10 to 16, wherein said data flow separator and director means (18, 19) comprises means for registering user preferences and responsive to the preferences registered in selecting and allocating network interfaces (2, 3) and corresponding Home Addresses (PH@, H@₂) for incoming and outgoing data packets.

## Patentansprüche

1. Verfahren zur Kommunikation unter Verwendung des mobilen Internetprotokolls zwischen einem Mobilknoten (1) und korrespondierenden Knoten (5, 6) in einem Netzwerk, welches des Weiteren einen Heimatagenten (7) für den Mobilknoten aufweist, wobei der Mobilknoten (1) eine Vielzahl von Netzwerkschnittstellen (2, 3) mit dem Netzwerk aufweist, wobei das Verfahren eine per-Fluss-Übergabeverwaltung der Datenflüsse umfasst, welches die selektive Übertragung unterschiedlicher Datenflüsse zwischen dem Mobilknoten (1) und den korrespondierenden Knoten (5, 6) über jeweilige der durch entsprechende Internetadressen identifizierte Netzwerkschnittstellen (2, 3) aufweist,
**dadurch gekennzeichnet, dass** eine Vielzahl von Heimatadressen (PH@, H@₂) für den Mobilknoten (1) mit dem Heimatagenten (7) registriert ist, wobei jeweilige von ihnen, welche den unterschiedlichen Datenflüssen zwischen dem Mobilknoten (1) und den korrespondierenden Knoten (5, 6) dynamisch zugeordnet sind, und entsprechende Netzwerkschnittstellen (2, 3) für den Mobilknoten den Heimatadressen (PH@, H@₂) dynamisch zugeordnet sind, so dass die unterschiedlichen Datenflüsse zwischen dem Mobilknoten (1) und demselben korrespondierenden Knoten (5 oder 6) den entsprechenden Netzwerkschnittstellen (2, 3) zugeordnet sind, und die Zuordnung der Netzwerkschnittstellen (2, 3) dynamisch modifiziert werden kann.

2. Verfahren zur Kommunikation nach Anspruch 1, **dadurch gekennzeichnet, dass** die unterschiedlichen Datenflüsse gleichzeitig zwischen dem Mobilknoten (1) und demselben korrespondierenden Knoten (5 oder 6) durch die entsprechenden Netzwerkschnittstellen mit entsprechenden Heimatadressen (PH@, H@₂) weitergeleitet werden.

3. Vefahren zur Kommunikation nach einem der Ansprüche 1 oder 2, **dadurch gekennzeichnet, dass** die "Mobile Prefix Solicitation"- und die "Mobile Prefix Advertisement"-Nachrichten zwischen dem Mobilknoten (1) und dem Heimatagenten (7) ausgetauscht werden, und dass der Mobilknoten (1) Präfixes von diesen Nachrichten verwendet, um entsprechende Heimatadressen (PH@, H@₂) einzurichten, zu konfigurieren, zu aktualisieren und/oder zu modifizieren.

4. Verfahren zur Kommunikation nach Anspruch 3, **dadurch gekennzeichnet, dass** der Heimatagent (7) eine Erfassung doppelter Adressen bei Heimatadressen durchführt, welche der Mobilknoten (1) einrichtet, konfiguriert, aktualisiert und/oder modifiziert.

5. Verfahren zur Kommunikation nach einem der vorhergehenden Ansprüche, **dadurch gekennzeichnet, dass** eine Sicherheitszuordnung zwischen den Heimatadressen und dem Heimatagenten (7) vorhanden ist.

6. Verfahren zur Kommunikation nach einem der vorhergehenden Ansprüche, **dadurch gekennzeichnet, dass** der Mobilknoten (1) eine Übergabe eines Datenflusses durchführt, welche das Senden einer Bindungs-Aktualisierung mit der zugeordneten Heimatadresse (PH@, H@₂) und der Internetprotokolladresse der ausgewählten Schnittstelle als Care-of-Adresse (CoA₁, CoA₂) an den Heimatagenten (7) umfasst.

7. Verfahren zur Kommunikation nach einem der vorhergehenden Ansprüche, **dadurch gekennzeichnet, dass** der Mobilknoten (1) eine Übergabe eines Datenflusses durchführt, welche das Senden einer Bindungs-Aktualisierung mit der zugeordneten Heimatadresse (PH@, H@₂) und der Internetprotokolladresse der ausgewählten Schnittstelle als Care-of-Adresse (CoA₁, CoA₂) an den korrespondierenden Knoten (5 oder 6) umfasst.

8. Verfahren zur Kommunikation nach einem der vorhergehenden Ansprüche, **dadurch gekennzeichnet, dass** der Mobilknoten (1) eine Übergabe eines Datenflusses durchführt, welche die Freigabe einer Heimatadresse (H@₂), die nicht länger zur Kommunikation zwischen dem Mobilknoten (1) und den korrespondierenden Knoten (5, 6) benötigt wird, umfasst.

9. Verfahren zur Kommunikation nach Anspruch 8, **dadurch gekennzeichnet, dass** der Mobilknoten (1) mindestens eine der Heimatadressen (PH@) als eine primäre Heimatadresse identifiziert, die nie freigegeben wird, wobei andere Heimatadressen (H@₂) bevorzugterweise zur Kommunikation zwischen dem Mobilknoten (1) und den korrespondierenden Knoten (5, 6) verwendet werden.

10. Mobilknoten für ein Verfahren zur Kommunikation nach einem der vorhergehenden Ansprüche, welches eine Datenflussseparator-(18) und Datenflussleitungs(19)vorrichtung zur Klassifizierung von mindestens abgehenden Datenpakten, zur Auswahl und Zuordnung einer Vielzahl von entsprechenden Netzwerkschnittstellen und einer Vielzahl von entsprechenden Heimatadressen (PH@, H@₂) für unterschiedliche Datenflüsse zwischen dem Mobilknoten (1) und denselben korrespondierenden Knoten (5, 6) und zur dynamischen Modifizierung der Zuordnung von Netzwerkschnittstellen und Heimatadressen (PH@, H@₂) aufweist.

11. Mobilknoten nach Anspruch 10, **dadurch gekennzeichnet, dass** die Datenflussseparator- und Datenflussleitungsvorrichtung (18, 19) eine Heimatadresstabelle (13) aufweist, welche die gegenwärtigen Heimatadressen (PH@, H@₂) des Mobilknotens (1) und der entsprechenden Care-of-Adressen (CoA₁, CoA₂) identifiziert, und eine Flussdarstellungstabelle (13) aufweist, welche den korrespondierenden Knoten (5, 6), der jedem gegenwärtigen Datenfluss zugehörig ist, und die entsprechenden ausgewählten Heimatadressen und Care-of-Adressen (CoA₁, CoA₂) identifiziert.

12. Mobilknoten nach Anspruch 10 oder 11, **dadurch gekennzeichnet, dass** die Datenflussseparator- und Datenflussleitungsvorrichtung (18, 19) ansprechend auf Anwendungen ist, welche auf dem Mobilknoten (1) zur Klassifizierung ankommender und abgehender Datenpakete laufen.

13. Mobilknoten nach einem der Ansprüche 10 bis 12, **dadurch gekennzeichnet, dass** die Datenflussseparator- und Datenflussleitungsvorrichtung (18, 19) ansprechend auf Protokolldatenköpfe der ankommenden und abgehenden Datenpakete bei der Klassifizierung der Datenpakete ist.

14. Mobilknoten nach einem der Ansprüche 10 bis 13, **dadurch gekennzeichnet, dass** die Datenflussseparator- und Datenflussleitungsvorrichtung (18, 19) eine Schnittstelle aufweist, die ansprechend auf den Netzwerkbetreiber bei der Klassifizierung der Datenpakete ist.

15. Mobilknoten nach einem der Ansprüche 10 bis 14, **dadurch gekennzeichnet, dass** die Datenflussseparator- und Datenflussleitungsvorrichtung (18, 19) ansprechend auf Anwendungen ist, die auf dem Mobilknoten (1) zur Auswahl und Zuordnung von Netzwerkschnittstellen (2, 3) und entsprechenden Heimatadressen (PH@, H@₂) für ankommende und abgehende Datenpakte laufen.

16. Mobilknoten nach einem der Ansprüche 10 bis 15, **dadurch gekennzeichnet, dass** die Datenflussseparator- und Datenflussleitungsvorrichtung (18, 19) eine Schnittstelle aufweist, die ansprechend darauf ist, dass der Netzwerkbetreiber Netzwerkschnittstellen (2, 3) und entsprechenden Heimatadressen (PH@, H@₂) für ankommende und abgehende Datenpakete auswählt und zuordnet.

17. Mobilknoten nach einem der Ansprüche 10 bis 16, **dadurch gekennzeichnet, dass** die Datenflussseparator- und Datenflussleitungsvorrichtung (18, 19) Vorrichtungen zur Registrierung der Benutzerpräferenzen aufweist und ansprechend auf die registrierten Präferenzen für die Auswahl und Zuordnung von Netzwerkschnittstellen (2, 3) und entsprechenen Heimatadressen (PH@, H@₂) für ankommende und abgehende Datenpakete ist.

## Revendications

1. Procédé de communication utilisant un protocole internet mobile entre un noeud mobile (1) et des noeuds de correspondant (5, 6) dans un réseau qui comporte également un agent d'attache (7) pour le noeud mobile, ledit noeud mobile (1) ayant une pluralité d'interfaces de réseau (2, 3) avec ledit réseau, ledit procédé comprenant la gestion de transfert flux par flux de flux de données, qui comporte l'étape consistant à transmettre sélectivement différents flux de données entre ledit noeud mobile (1) et des noeuds de correspondant (5, 6) sur des interfaces respectives desdites interfaces de réseau (2, 3) identifiées par des adresses Internet respectives,
**caractérisé en ce qu'**une pluralité d'adresses permanentes *(PH@, H@₂*) pour ledit noeud mobile (1) est enregistrée avec ledit agent d'attache (7), dont des adresses permanentes respectives sont affectées dynamiquement auxdits différents flux de données entre ledit noeud mobile (1) et des noeuds de correspondant (5, 6), et **en ce que** des interfaces de réseau (2, 3) respectives pour ledit noeud mobile sont affectées dynamiquement auxdites adresses permanentes (*PH*@, *H*@*₂*)) de sorte que lesdits différents flux de données entre ledit noeud mobile (1) et le même noeud de correspondant (5 ou 6) soient affectés à des interfaces de réseau respectives (2, 3) et que l'affectation d'interfaces de réseau (2, 3) puisse être modifiée dynamiquement.

2. Procédé de communication selon la revendication 1, dans lequel lesdits différents flux de données sont communiqués simultanément entre ledit noeud mobile (1) et le même noeud de correspondant (5 ou 6) au travers desdites interfaces de réseau respectives avec les adresses permanentes respectives (*PH@,* H@*₂*)

3. Procédé de communication selon la revendication 1 ou 2, dans lequel des messages de sollicitation de préfixe de mobile et d'annonce de préfixe de mobile sont échangés entre ledit noeud mobile (1) et ledit agent d'attache (7) et ledit noeud mobile (1) utilise des préfixes de ces messages pour établir, configurer, rafraîchir et/ou modifier lesdites adresses permanentes respectives (PH@, H@₂).

4. Procédé de communication selon la revendication 3, dans lequel ledit agent d'attache (7) exécute une détection d'adresse dupliquée sur des adresses permanentes que ledit noeud mobile (1) établit, configure, rafraîchit et/ou modifie.

5. Procédé de communication selon l'une quelconque des revendications précédentes, dans lequel une association de sécurité existe entre lesdites adresses permanentes et ledit agent d'attache (7).

6. Procédé de communication selon l'une quelconque des revendications précédentes, dans lequel ledit noeud mobile (1) exécutant un transfert de flux de données comporte l'étape consistant à envoyer une mise à jour des liaisons avec l'adresse permanente associée *(PH@* ou *H*@₂) et l'adresse IP de l'interface sélectionnée en tant qu'adresse « au bon soin » (CoA₁, CoA₂) audit agent d'attache (7).

7. Procédé de communication selon l'une quelconque des revendications précédentes, dans lequel ledit noeud mobile (1) exécutant un transfert de flux de données, comporte l'étape consistant à envoyer une mise à jour des liaisons avec l'adresse permanente associée (PH@ ou H@2) et l'adresse IP de l'interface sélectionnée en tant qu'adresse « au bon soin » audit noeud de correspondant (5 ou 6).

8. Procédé de communication selon l'une quelconque des revendications précédentes, dans lequel ledit noeud mobile (1) exécutant un transfert de flux de données inclut l'étape consistant à libérer une adresse permanente *(H@*2*)* qui n'est plus utilisée pour la communication entre ledit noeud mobile (1) et lesdits noeuds de correspondant (5, 6).

9. Procédé de communication selon la revendication 8, dans lequel ledit noeud mobile (1) identifie au moins l'une desdites adresses permanentes (PH@) en tant qu'une adresse permanente primaire qui n'est jamais libérée, d'autres adresses permanentes (H@2) étant de préférence utilisées pour la communication entre ledit noeud mobile (1) et lesdits noeuds de correspondant (5, 6).

10. Noeud mobile pour un procédé de communication selon l'une quelconque des revendications précédentes, comportant des moyens de directeur (19) et de séparateur (18) de flux de données en vue de classer au moins les paquets de données sortants, de sélectionner et d'affecter une pluralité d'interfaces de réseau respectives et une pluralité d'adresses permanentes correspondantes (*PH@* ou *H*@2) pour différents flux de données entre ledit noeud mobile (1) et le même noeud de correspondant (5 ou 6), et de modifier l'affectation des interfaces de réseau et des adresses permanentes *(PH@, H@*₂) dynamiquement.

11. Noeud mobile selon la revendication 10, dans lequel lesdits moyen de séparateur et de directeur de flux de données (18, 19) comportent une table d'adresses permanentes (13) identifiant les adresses permanentes en cours (*PH@, H*@₂) du noeud mobile (1) et des adresses « au bon soin » correspondantes (CoA₁, CoA₂), et une table de mappage de flux (13) identifiant le noeud de correspondant (5, 6) associé à chaque flux de données en cours et les adresses permanentes et adresses « au bon soin » sélectionnées correspondantes (CoA₁, CoA₂).

12. Noeud mobile selon la revendication 10 ou 11, dans lequel lesdits moyens de séparateur de flux de données et de directeur de flux de données (18, 19) sont sensibles à des applications utilisées sur ledit noeud mobile (1) en classant les paquets de données entrants et sortants.

13. Noeud mobile selon l'une quelconques des revendications 10 à 12, dans lequel lesdits moyens de séparateur de flux de données et de directeur de flux de données (18, 19) sont sensibles aux en-têtes de protocole des paquets de données entrants et sortants en classant lesdits paquets de données.

14. Noeud mobile selon l'une quelconques des revendications 10 à 13, dans lequel lesdits moyens de séparateur de flux de données et de directeur de flux de données (18, 19) comportent une interface sensible à l'opérateur de réseau en classant lesdits paquets de données.

15. Noeud mobile selon l'une quelconques des revendications 10 à 14, dans lequel lesdits moyens de séparateur de flux de données et de directeur de flux de données (18, 19) sont sensibles aux applications utilisées sur ledit noeud mobile (1) en sélectionnant et en affectant des interfaces de réseau (2, 3) et des adresses permanentes correspondantes *(PH@, H*@2) pour les paquets de données entrants et sortants.

16. Noeud mobile selon l'une quelconques des revendications 10 à 15, dans lequel lesdits moyens de séparateur de flux de données et de directeur de flux de données (18, 19) comportent une interface sensible à l'opérateur de réseau en sélectionnant et en affectant les interfaces de réseau (2, 3) et les adresses permanentes correspondantes (*PH@*, *H*@2) pour les paquets de données entrants et sortants.

17. Noeud mobile selon l'une quelconques des revendications 10 à 16, dans lequel lesdits moyens de séparateur de flux de données et de directeur de flux de données (18, 19) comportent des moyens en vue d'enregistrer des préférences d'utilisateur et sensibles aux préférences enregistrées en sélectionnant et en affectant des interfaces de réseau (2, 3) et des adresses permanentes correspondantes (PH@, H@₂) pour des paquets de données entrants et sortants.
